# EUROPEAN PATENT APPLICATION

(11) **EP 1 256 809 A1**
(43) Date of publication of application: **13.11.2002**
(21) Application number: 01271546.2
(22) Date of filing: 17.12.2001
(51) Int. Cl.: G01N 37/00

(54) **METHOD OF FORMING DETECTION POINTS IN CHIP FOR DETECTING SUBJECT**

(30) Priority: 18.12.2000 JP 2000383752
(71) Applicant: NGK INSULATORS, LTD., Nagoya-shi Aichi 467-8530 (JP)
(72) Inventor: OHNISHI, Takao c/o NGK Insulators, Ltd., Nagoya-shi, Aichi 467-8530 (JP); HIROTA, Toshikazu c/o NGK Insulators, Ltd., Nagoya-shi, Aichi 467-8530 (JP); KIRA, Shigeki c/o NGK Insulators, Ltd., Nagoya-shi, Aichi 467-8530 (JP)
(74) Representative: Paget, Hugh Charles Edward
(86) International application number: JP0111015
(87) International publication number: WO02050552

(57) **Abstract**

When a large number of detection spots are to be formed on analyte detection chips such as DNA chips or DNA microarrays, spot-forming liquid containing a component for formation of detection spots is spotted simultaneously to the surfaces of a plurality of slide glasses or to a plurality of regions on a single slide glass to thereby improve the fabrication efficiency of detection chips and provide the detection chips inexpensively.

A plurality of injection modules 10a, 30a, and 40a are employed as a means for forming detection spots on slide glasses. Each injection module is equipped with injection units 10d adapted to jet spot-forming liquid containing a component for formation of the detection spots. The spot-forming liquid is jetted simultaneously from the injection units 10a, 30a, and 40a of the respective injection modules toward the surfaces of the plurality of slide glasses 20 corresponding to the injection modules, or a plurality of regions on the single slide glass 20, in order to simultaneously form detection spots on the surfaces of the plurality of slide glasses, or in the regions on the single slide glass. Thus, the efficiency in formation of detection spots is improved.

## Description

### Technical Field

The present invention relates to a method of forming detection spots on an analyte detection chip, such as a DNA chip, a DNA microarray, a bio chip, or a protein chip.

### Background Art

A detection chip includes a support such as slide glass, and a large number of detection spots arranged in a regular pattern on a surface of the support and containing different components. Such a detection chip detects a specific component of an applied analyte through determination of the relation of specificity between the specific component of the applied analyte and a specific detection spot among the detection spots. Examples of such a detection chip include DNA chips, DNA microarrays, bio chips, and protein chips.

The configuration and function of such a detection chip will be described in detail, while DNA chips and DNA microarrays are taken as examples. DNA chips and DNA microarrays are utilized in expression analysis for determining whether a specific known gene sequence has been expressed; diversity analysis for specifying the relationship between a gene sequence and constitution, diseases, etc.; and analyses of other types. Several to several tens of thousands of detection spots including different DNA fragments as components are formed on a support having a size of several mm² to slightly over 10 cm².

In such a DNA chip or DNA microarray, each of the detection spots on the surface of the support is used as a DNA target; and DNA contained in an analyte is labeled with fluorescence dye and used as a probe DNA. The probe DNA is hybridized with the target DNA; and then the fluorescence intensity of each detection spot is measured by use of a dedicated analyzer in order to measure the probe DNA. Notably, bio chips and protein chips resemble DNA chips in terms of function, although components of their detection spots differ from those of DNA chips, and a component of an analyte to be specified differs from that for the case of DNA chips.

As is apparent from the above, an indispensable characteristic of a detection chip is regular arrangement, on the surface of a support of the detection chip, of a large number of detection spots each of containing different component each other. Therefore, an important task during fabrication of such a detection chip is to spot at high density a large number of detection spots containing different components. In general, a spotting scheme utilizing a spotter is employed for formation of detection spots.

The spotter used in the above-described spotting scheme is an apparatus including spot formation means, such as a single or a plurality of pins, for holding spot-forming liquid and for forming spots on a support surface, and drive means for moving the spot formation means along the x, y, and z directions. In operation, the single or plurality of pins, which hold spot-forming liquid, are moved above the surface of the support along the x and y directions. At a preset position, the pins are moved along the z direction such that the tip of each pin comes into contact with the support surface and spots the spot-forming liquid at a predetermined region of the support surface to thereby form a detection spot.

That is, in the spotting scheme, each pin is moved in the x, y, and z directions. In particular, during spotting, the pin must be moved along the z direction (in a direction toward the support surface) in such a manner that the tip of the pin comes into contact with the support surface without fail.

Meanwhile, in order to increase the spotting efficiency of the spotting scheme, a plurality of pins may be used for concurrently forming a plurality of spots on a plurality of supports. However, in this case, extremely high accuracy is required in movement of all the pins along the z direction and in synchronization of their movements, because, in the spotting scheme, each pin is moved in the x, y, and z directions during spotting, in particular, the pins must be moved along the z direction (downward) in such a manner that the tip of each pin comes into contact with the support surface without fail. Therefore, at present, the spotting scheme cannot reliably form a plurality of spots concurrently on a plurality of supports by use of a plurality of pins.

Moreover, spot-forming liquids corresponding to all of the plurality of pins must be spotted on a single support. Therefore, when a plurality of spots are to be formed on a plurality of supports by use of a plurality of pins, it is physically impossible to bring the plurality of pins into contact with the surfaces of the plurality of supports without fail during all spotting operations. Accordingly, during some spotting operations, some of the pins fail to come into contact with the support, and as a result spot-forming liquids held by the pins cannot be spotted on all the supports in the same state at all times. Thus, a problem of impaired spotting uniformity arises.

Therefore, when the spotting scheme is employed, spots are formed on the surface of a single support by means of a single spotting operation, and the spotting operation is repeated while the pin is moved to the surfaces of the remaining supports in a circulative manner, whereby the spotting operation is successively performed on a support-by-support basis. Accordingly, fabrication of a large number of detection chips each having several thousand to several tens of thousands of detection spots on a support requires an extremely long time, thereby considerably increasing cost of detection chips.

Further, in recent years, in order to cope with a trace quantity of analyte, demand has arisen for a detection chip in which a relatively small number (several to several hundreds) of detection spots are spotted within a very narrow area of several mm² or less. In the case of such a detection chip, the number of spot-forming liquids is relatively small; however, due to narrow spotting areas, a large number of spots cannot be formed concurrently through a single spotting operation or single loading of spot-forming liquids to the pins. In practice, there must be employed an inefficient method in which spotting and cleaning are repeated by use of one or two pins.

### Disclosure of Invention

The present invention is directed to a method of forming detection spots on an analyte detection chip, and a first object of the present invention is to enable simultaneous spotting, onto a plurality of supports, of a spot-forming liquid containing a component for formation of detection spots, to thereby drastically improve the efficiency of a process for fabricating detection chips each having several thousands to several tens of thousands of detection spots on the surface of a support. A second object of the present invention is to drastically improve the efficiency of a process for fabricating detection chips each having a relatively small number (several to several hundreds) of detection spots spotted within a very narrow area of several mm² or less.

In particular, the present invention is applicable to a detection chip which includes a support, and a large number of detection spots arranged in a regular pattern on a surface of the support and containing different components. Such a detection chip detects a specific component of an applied analyte through determination of the relation of specificity between the specific component of the applied analyte and a specific detection spot among the detection spots.

A first detection-spot forming method according to the present invention employs, as means for forming detection spots on the surface of a support, a plurality of injection modules each equipped with one or more injection units adapted to jet spot-forming liquid containing a component for formation of the detection spots. The spot-forming liquid is jetted simultaneously from the injection units of the respective injection modules toward the surfaces of a plurality of supports corresponding to the injection modules in order to simultaneously form detection spots on the surfaces of the supports.

A second detection-spot forming method according to the present invention employs, as means for forming detection spots on the surface of a support, a plurality of injection modules each equipped with one or more injection units adapted to jet spot-forming liquid containing a component for formation of the detection spots. The spot-forming liquid is jetted simultaneously from the injection units of the respective injection modules toward a plurality of regions on the surface of a single support which faces the injection modules in order to simultaneously form detection spots in the plurality of regions on the surface of the support, which is then divided into a plurality of pieces.

In the first detection-spot forming method according to the present invention, the positions of the injection units of the injection modules, which face the surfaces of the respective supports, may be determined such that the distances between the corresponding injection units of the injection modules become integral multiples of the intervals of the detection spots; and the injection modules may be caused to successively form detection spots in different regions on the surfaces of the respective supports, while moving to locate above the surfaces of the supports successively. Notably, the above description "the positions of the injection units of the injection modules, which face the surfaces of the respective supports, are determined such that the distances between the corresponding injection units of the injection modules become an integral multiple of the intervals of the detection spots" means that the distance between the injection modules, which fixedly support corresponding injection units and therefore determine positions of discharge ports of the injection units, is rendered equal to an integral multiple of the intervals of the detection spots.

Further, in the first detection-spot forming method according to the present invention, when the injection modules are moved to be located above the surfaces of the respective supports successively, spot-forming liquid jetted from injection units located outside the surfaces of the supports may be used for judgment as to whether the injection units operate properly.

In the first detection-spot forming method according to the present invention, each injection module includes at least one injection unit. The injection unit may include a charge port for charging a spot-forming liquid from the outside, a cavity into which the spot-forming liquid is introduced and charged, and a discharge port for discharging the spot-forming liquid; and a piezoelectric/electrostrictive element attached to at least one side wall surrounding the cavity, wherein the cavity is made of ceramic so as to be configured to allow the spot-forming liquid to flow within the cavity, and upon drive of the piezoelectric/electrostrictive element, the volume of the cavity is changed in order to discharge the spot-forming liquid in a predetermined amount from the discharge port, to thereby form a detection spot on the surface of the support.

In the first detection-spot forming method according to the present invention, each injection module may include a large number of injection units which hold different spot-forming liquids for forming different detection spots containing different components.

In the first detection-spot forming method according to the present invention, the detection chip may be a DNA chip or DNA microarray having detection spots containing DNA fragments, a bio chip having detection spots including antibodies, or a protein chip having detection spots including proteins.

The above-described respective means used in the first detection-spot forming method according to the present invention can be used in the second detection-spot forming method according to the present invention as well. In such a case, the above-described means are used appropriately in consideration of the relationship with a plurality of regions on the surface of a single support which face the plurality of injection modules.

In the first and second detection-spot forming methods according to the present invention, injection means utilizing injection units is used as means for spotting detection spots to thereby solve the drawback in the conventional pin-type spotting method.

Since the injection means utilizing injection units is of a non-contact type, during spotting operation, pins are not required to move along the z-axis direction (downward) so as to bring the tips thereof with the surface of a support. Neither Z-axis movements of the injection units nor synchronization of the movements requires very high accuracy. Thus, it becomes possible to simultaneously form detection spots on the surfaces of a plurality of supports, or in a plurality of regions on the surface of a single support, by use of a plurality of injection units.

Therefore, in the first detection-spot forming method according to the present invention, since a plurality of injection modules each equipped with one or more injection units are employed, the injection units of these injection modules can be caused to simultaneously jet spot-forming liquids to the surfaces of supports which are equal in number to the injection modules. Use of such a spotting means improves the efficiency of a process of fabricating detection chips each having several thousands to several tens of thousands of detection spots.

Specifically, the first detection-spot forming method according to the present invention can shorten the time required to form detection spots during the fabrication of a large number of detection chips each having several thousands to several tens of thousands of detection spots, as compared with a conventional detection-spot forming method which uses a single spotter and employs a spotting scheme on the basis of contact with the surface of a support, such as a pin scheme, which can form detection spots on the surface of a single support only through a single spotting operation. Thus, cost of detection chips can be reduced greatly in order to provide the detection chips inexpensively. Further, there can be advantageously employed a scheme in which injection modules each including a plurality of injection units disposed at predetermined positions are used to simultaneously jet spot-forming liquids to a plurality of supports.

In the first detection-spot forming method according to the present invention, the injection units of the respective injection modules are always in a state of actuating during formation of detection spots. Therefore, the first detection-spot forming method can avoid the problem involved in the conventional spotting method using pins such that some pins fail to come into contact with a support, and thus spot-forming liquid held by the pins cannot be spotted on all the supports in the same state at all times, resulting in impaired spotting uniformity. In other words, when the first detection-spot forming method is employed, spot-forming liquid within the injection nozzles of the injection units does not dry, and therefore, jetting of spot-forming liquid can be performed consistently, so that predetermined detection spots can be formed reliably.

In the second detection-spot forming method according to the present invention, injection means using injection units is employed as means for forming a relatively small number (several to several hundreds) of detection spots in a very narrow region of several mm² or less, in order to solve the problem involved in the conventional inefficient method in which spotting and cleaning are repeated by use of one or two pins. Since the injection means utilizing injection units is of a non-contact type, it becomes possible to simultaneously form detection spots on a plurality of regions on the surface of a single support in order to simultaneously form a plurality of detection spots.

In the second detection-spot forming method according to the present invention, a plurality of injection modules each equipped with one or more injection units are employed. The injection units of the injection modules are caused to simultaneously jet different spot-forming liquids to a plurality of regions on the surface of a single support. Subsequently, the injection modules are moved successively to different regions on the surface of the support in order to jet the spot-forming liquids to the different regions on the surface of the support. Thus, a plurality of detection chips each having several to several hundreds of detection spots can be simultaneously formed on a single support. Thus, the efficiency in fabricating such detection chips can be improved.

Specifically, the second detection-spot forming method according to the present invention can simultaneously form detection spots in a plurality of regions on the surface of a single support to thereby simultaneously form a plurality of detection chips on the single support, unlike the case of a conventional detection-spot forming method which uses a single spotter and utilizes a spotting scheme on the basis of contact with the surface of a support, such as a pin scheme, which can perform spotting at one or two locations through a single spotting operation. The support is then divided into a plurality of pieces; i.e., detection chips. The second detection-spot forming method can shorten the time required for fabricating a large number of detection chips. Thus, cost of detection chips can be reduced greatly in order to provide the detection chips inexpensively.

In the first detection-spot forming method according to the present invention, the positions of the injection units of the injection modules, which face the surfaces of the respective supports, are determined such that the distances between the corresponding injection units of the injection modules become an integral multiple of the intervals of the detection spots; and the injection modules successively form detection spots in different regions on the surfaces of the respective supports, while moving to locate above the surfaces of the supports successively. Therefore, the number of times of movement of the injection modules during formation of detection spots can be reduced, as compared with the case in which detection spots can be formed on the surface of a single support only through a single spotting operation.

Similarly, in the second detection-spot forming method according to the present invention, the positions of the injection units of the injection modules, which face a plurality of regions of the surface of a single support, are determined such that the distances between the corresponding injection units of the injection modules become integral multiples of the intervals of the detection spots; and the injection modules successively form detection spots in different regions on the surface of the single support, while moving to locate above the different regions of the support successively. Therefore, the number of times of movement of the injection modules during formation of detection spots can be reduced, as compared with the case in which detection spots can be formed on a single region on the surface of a support only through a single spotting operation.

The above-described feature suppresses drying of spot-forming liquid at the exit ends of the injection nozzles of the injection units, which would otherwise occur due to air flow caused by movement of the injection modules, and suppresses vibration of the injection nozzles, which occurs due to movement of the injection modules. Therefore, during formation of detection spots, spot-forming liquid can be jetted from the injection units of the injection modules more consistently, and thus, predetermined detection spots can be formed reliably. As a result, quality of detection chips can be improved further.

The positions of the injection units of the injection modules, which face the surfaces of the respective supports, are determined such that the distances between the corresponding injection units of the injection modules become an integral multiple of the intervals of the detection spots. Therefore, when the injection modules successively form detection spots in different regions on the surfaces of the respective supports while moving to locate above the surfaces of the supports successively, one injection module forms detection spots on one support, while other injection modules form detection spots on other supports. At this time, spotting can be performed without involvement of positional deviation of detection spots. Similarly, the positions of the injection units of the injection modules, which face a plurality of regions of the surface of a single support, are determined such that the distances between the corresponding injection units of the injection modules become an integer multiple of the intervals of the detection spots. Therefore, when the injection modules successively form detection spots in different regions on the surface of the single support while moving to locate above the different regions of the support successively, one injection module forms detection spots for one detection chip, while other injection modules form detection spots for other detection chips. At this time, spotting can be performed without involvement of positional deviation of detection spots.

Since each injection module successively forms detection spots while holding in its injection units spot-forming liquid of an amount corresponding to several hundreds to several hundreds of thousands of detection spots, operation for charging the spot-forming liquid is required to be performed a reduced number of times, as compared with the case in which only spot-forming liquid for one to several detection spots is charged by a single charging operation; e.g., in the case of a conventional pin-type spotting scheme. As a result, the time required for fabricating a large number of detection chips can be shortened greatly.

In the detection-spot forming methods according to the first and second embodiments, when the injection modules are successively moved to locations above the surfaces of supports, or different regions on the surface of a single support, in order to jet spot-forming liquid, some of the injection modules move to positions outside the support(s). Even in such a case, the injection units of the injection modules located outside the support(s) are caused to jet spot-forming liquid in order to maintain all the injection units in a state of use. The spot-forming liquid jetted from injection units of the injection modules located outside the support(s) can be used for judgment as to whether the state of jetting is proper.

The detection-spot forming methods according to the present invention can be applied not only to fabrication of DNA chips or DNA microarrays each having detection spots including DNA fragments as components, but also to fabrication of bio chips each having detection spots including antibodies as components, and protein chips each having detection spots including proteins as components. In particular, during fabrication of DNA chips or DNA microarrays, spot-forming liquids containing DNA fragments having limited useful lives are handled, and therefore, such detection spots must be formed as quickly as possible. Accordingly, the detection-spot forming methods according to the present invention are most suitable for fabrication of DNA chips and DNA microarrays.

### Brief Description of Drawings

Fig. 1 is a schematic structural view of an injection apparatus used in a detection-spot forming method according to a first embodiment of the present invention;
Fig. 2 is a perspective view of an injection module which constitutes the injection apparatus;
Fig. 3 is a vertical cross section of an injection unit which constitutes the injection module;
Fig. 4 is a plan view of slide glasses, on which detection spots are formed by the detection-spot forming method;
Fig. 5 is a partially enlarged plan view of the slide glasses;
Fig. 6 is a plan view of one area of the slide glass, showing the number of detection spots which can be formed simultaneously in the area;
Fig. 7 is a schematic structural view of an injection apparatus used in a detection-spot forming method according to a second embodiment of the present invention;
Fig. 8 is a perspective view of an injection module which constitutes the injection apparatus;
Fig. 9 is a plan view of slide glasses, on which detection spots are formed by the detection-spot forming method;
Fig. 10 is a partially enlarged plan view of the slide glasses;
Fig. 11 is a schematic structural view of an injection apparatus used in a detection-spot forming method according to a third embodiment of the present invention;
Fig. 12 is a plan view of each slide glass, on which detection spots are formed by the detection-spot forming method;
Fig. 13 is an enlarged plan view of one area of one detection spot group on the slide glass; and
Fig. 14 is a plan view showing a method for dividing the slide glass.

### Best Mode for Carrying Out the Invention

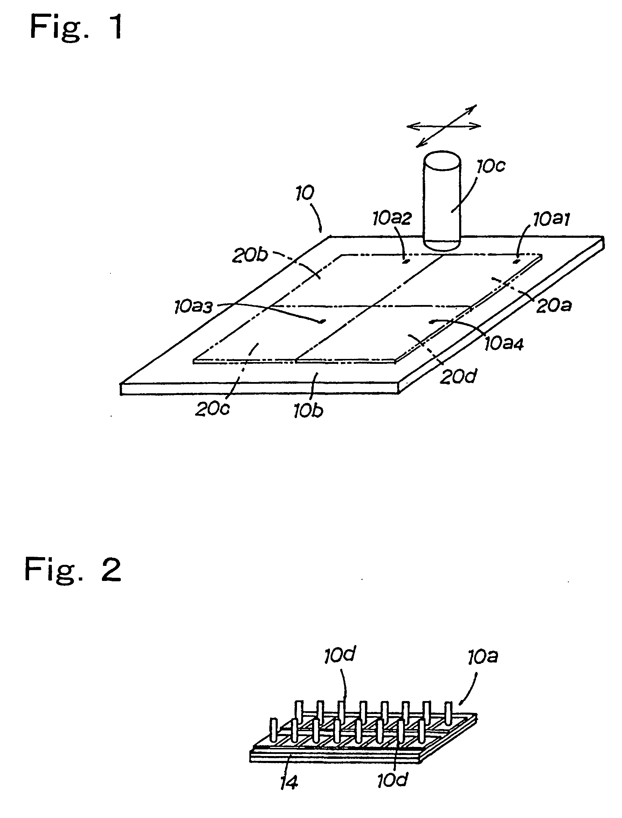

The present invention relates to a method of forming detection spots on an analyte detection chip. Figs. 1 to 6 show a forming method according to a first embodiment adapted to form detection spots on a DNA chip or DNA microarray, which serves as a detection chip.

Fig. 1 shows a positional relationship between an injection apparatus 10 used in the forming method and adapted to dispense a spot-forming liquid, and slide glasses 20 (indicated by two-dot chain lines and denoted by 20a to 20d), which are used as supports. The injection apparatus 10 is an experimental apparatus for experimentally carrying out the detection-spot forming method according to the present invention and includes four injection modules 10a (10a1 to 10a4). However, a practical apparatus may include several to several tens of injection modules 10a.

The four injection modules 10a of the injection apparatus 10 are disposed on a support table 10b. The injection apparatus 10 includes a drive unit 10c for intermittently moving the support table 10b within a horizontal plane along a front/back direction and a left/right direction (the directions of arrows shown in Fig. 1). Accordingly, all the injection modules 10a can be intermittently moved, together with the support table 10b, within a horizontal plane along the front/back and left/right directions.

Meanwhile, the number of slide glasses 20 on which detection spots are to be formed is set to four in order to match the number of the injection modules 10a. That is, four slide glasses 20a, 20b, 20c, and 20d are disposed below the injection apparatus 10 such that the slide glasses 20a, 20b, 20c, and 20d face the respective injection modules 10a with a predetermined vertical gap formed therebetween.

Notably, in the following description in relation to the injection modules 10a (10a1 to 10a4), the injection modules are denoted by 10a1 to 10a4 when they must be distinguished from each other, and the injection modules are denoted collectively by 10a when they need not be distinguished from each other. A similar rule is applied to the slide glasses 20 (20a, 20b, 20c, and 20d).

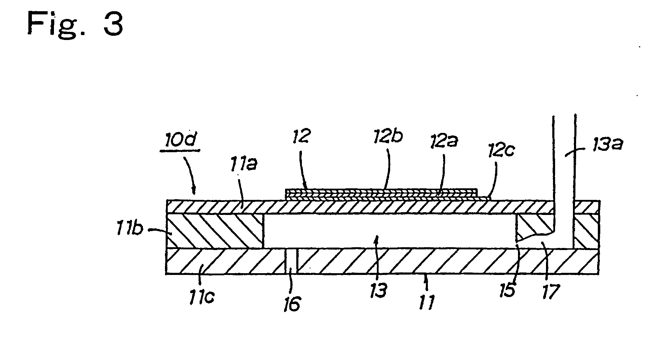

As shown in Fig. 2, each injection module 10a of the injection apparatus 10 is provided with 16 injection units 10d arranged in an 8 x 2 array. Each injection unit 10d is configured as shown in Fig. 3. The injection unit 10d includes a substrate 11 having a cavity for accommodating a spot-forming liquid, and drive means 12. In the present embodiment, a micro-pipet proposed in Japanese Patent Application No. 11-301626 (relating to a previous invention assigned to the same assignee as that of the present invention) is used as the injection unit 10d.

The substrate 11 of the injection unit 10d is formed through a process of sintering a laminate of green sheets of zirconia ceramics in such a manner that the substrate 11 includes a closure plate 11a, a spacer plate 11b, and a nozzle plate 11c, which cooperate to form a cavity 13 therein. A spot-forming liquid charge inlet 13a communicates with the cavity 13 via a communication passage 17 and an introduction opening 15. Further, a discharge port (injection nozzle) 16 communicates with the cavity 13.

The drive means 12 is composed of a piezoelectric/electrostrictive element, which includes an intermediate piezoelectric/electrostrictive layer 12a, and upper and lower electrodes 12b and 12c, which sandwich the piezoelectric/electrostrictive layer 12a. The drive means 12 is bonded to the closure plate 11a of the substrate 11 in such a manner that the lower electrode 12c faces the top surface of the closure plate 11a. The drive means 12 operates upon application of voltage to the electrodes 12b and 12c. Specifically, upon application of voltage to the electrodes 12b and 12c, the piezoelectric/ electrostrictive layer 12a deforms so as to reduce the volume of the cavity 13. As a result of a reduction in the volume of the cavity 13, a predetermined amount of the spot-forming liquid is discharged from the cavity 13 via the discharge port 16 at a predetermined rate.

A spot-forming liquid containing DNA fragments is accommodated in the cavity 13 of the injection unit 10d, and the spot-forming liquid is intermittently discharged a predetermined amount at a time, whereby minute detection spots of a DNA chip or DNA microarray are formed on the slide glasses 20. Although the size of the cavity 13 is determined in consideration of the size of detection spots to be formed, the cavity 13 has a length of 1 mm to 5 mm, a width of 0.1 mm to 1 mm, and a thickness of 0.1 mm to 0.5 mm. The spot-forming liquid containing DNA fragments is prepared through a process of dispersing DNA fragments having a length of about 1 to 10,000 base pairs into a buffer solution (pH 7.0) containing sodium chloride (0.45 M) and sodium citrate (0.045 M) in such a manner that the concentration of the DNA fragments becomes 0.3 µg/µl. Use of the injection unit 10d enables the spot-forming liquid to be jetted in the form of droplets having a diameter of slightly greater than 100 µm, at a pitch of several hundreds µm. The injection units 10d are arranged in a regular pattern on a module base 14 in order to form the injection module 10a.

Detection spots are formed on the surfaces of the slide glasses 20a, 20b, 20c, and 20d in the following manner by use of the injection apparatus 10. The drive unit 10c is operated to intermittently move the support table 10b in a horizontal plane along the front/back direction and/or the left/right direction in such a manner that the injection modules 10a1 to 10a4 disposed on the support table 10b are caused to successively face predetermined regions of the surfaces of the slide glasses 20a, 20b, 20c, and 20d, which are disposed below the injection apparatus 10; and all the injection units 10d of the respective injection modules 10a1 to 10a4 are caused to simultaneously jet spot-forming liquids toward the predetermined regions of the surfaces of the slide glasses 20a, 20b, 20c, and 20d. Thus, detection spots which are equal in number to the injection units 10d are formed in the regions.

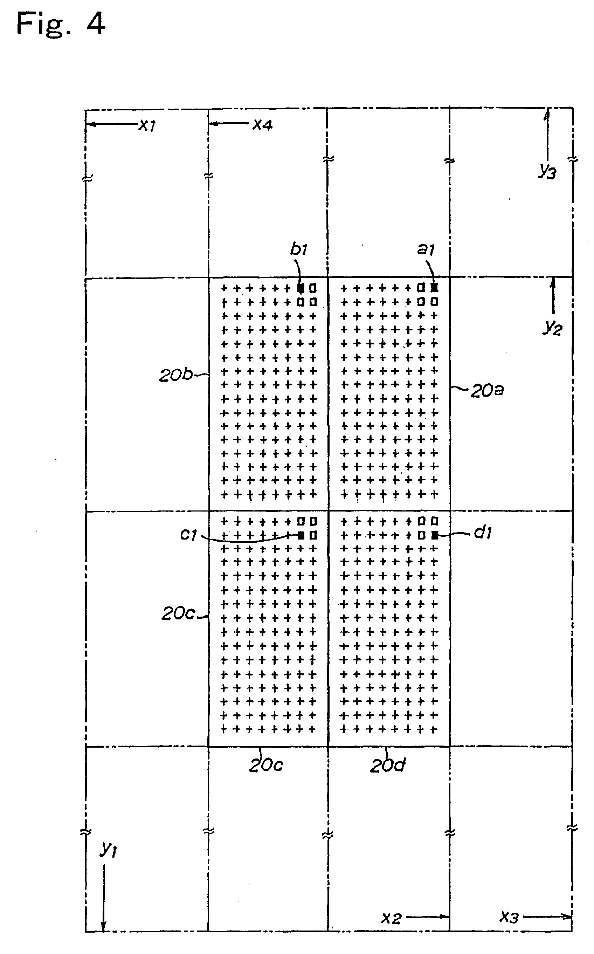

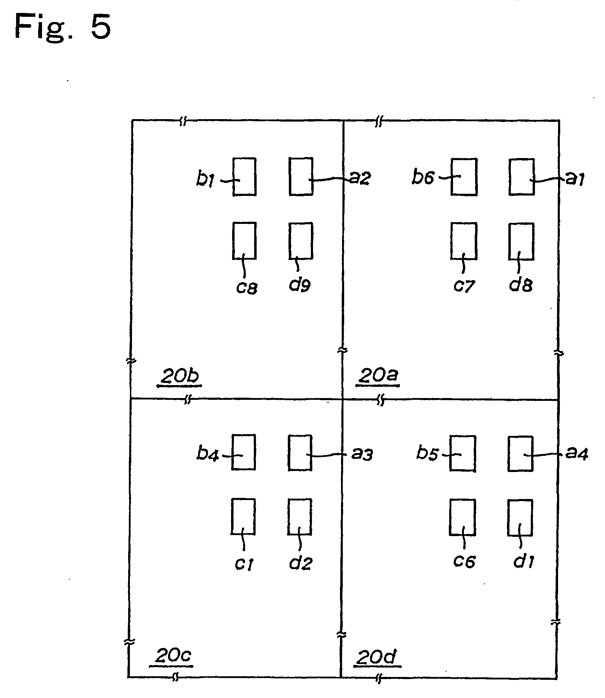

Fig. 4 shows the surfaces of the slide glasses 20a, 20b, 20c, and 20d in the midst of an operation for forming detection spots. Fig. 5 shows portions of the surfaces of the slide glasses 20a, 20b, 20c, and 20d in an enlarged manner.

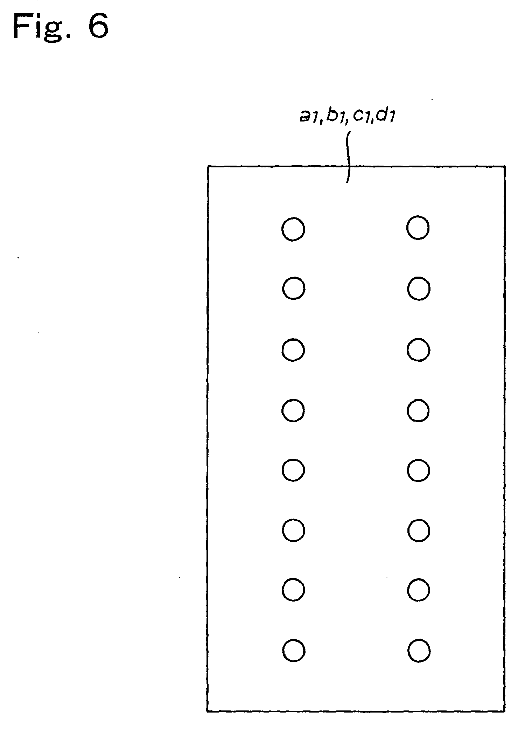

In Fig. 4, black-colored regions a1 b1, c1, and d1 represent regions in which the injection modules 10a1 to 10a4 form detection spots simultaneously during a first spotting operation. In the black-colored regions a1, b1 c1, and d1 of the slide glasses 20a, 20b, 20c, and 20d, all the injection units 10d of the injection modules 10a1 to 10a4 jet spot-forming liquids simultaneously in order to form detection spots simultaneously. The number of simultaneously formed detection spots corresponds to the number of the injection units 10d provided in the injection modules 10a1 to 10a4. When the above-described injection apparatus 10 is used, as shown in Fig. 6, 16 detection spots are formed in an 8 x 2 array in each of the black-colored regions a1, b1, c1, and d1. The detection spots thus formed all differ from one another in terms of components contained therein.

After completion of the first spotting operation, the injection apparatus 10 is moved in the direction of arrow x1 shown in Fig. 4 by an amount corresponding to the width of the slide glasses 20a, 20b, 20c, and 20d, in order to position the injection modules 10a1 and 10a4 above the surfaces of the slide glasses 20b and 20c. Subsequently, a second spotting operation is performed in the same manner as in the first spotting operation. As a result, spot-forming liquid is jetted from the injection module 10a1 toward a spot region a2 of the slide glass 20b shown in Fig. 5, whereby the same detection spots as those formed in the spot region a1 are formed in the spot region a2. Similarly, spot-forming liquid is jetted from the injection module 10a4 toward a spot region d2 of the slide glass 20c shown in Fig. 5, whereby the same detection spots as those formed in the spot region d1 are formed in the spot region d2.

After completion of the second spotting operation, the injection apparatus 10 is moved in the direction of arrow y1 shown in Fig. 4 by an amount corresponding to the length of the slide glasses 20a, 20b, 20c, and 20d, in order to position the injection module 10a1 above the surface of the slide glass 20c. Subsequently, a third spotting operation is performed in the same manner as in the second spotting operation. As a result, spot-forming liquid is jetted from the injection module 10a1 toward a spot region a3 of the slide glass 20c shown in Fig. 5, whereby the same detection spots as those formed in the spot region a1 are formed in the spot region a3.

After completion of the third spotting operation, the injection apparatus 10 is moved in the direction of arrow x2 shown in Fig. 4 by an amount corresponding to the width of the slide glasses 20a, 20b, 20c, and 20d, in order to position the injection modules 10a2 and 10a1 above the surfaces of the slide glasses 20c and 20d. Subsequently, a fourth spotting operation is performed in the same manner as in the third spotting operation. As a result, spot-forming liquid is jetted from the injection module 10a2 toward a spot region b4 of the slide glass 20c shown in Fig. 5, whereby the same detection spots as those formed in the spot region b1 are formed in the spot region b4. Similarly, spot-forming liquid is jetted from the injection module 10a1 toward a spot region a4 of the slide glass 20d shown in Fig. 5, whereby the same detection spots as those formed in the spot region a1 are formed in the spot region a4.

After completion of the fourth spotting operation, the injection apparatus 10 is moved in the direction of arrow x3 shown in Fig. 4 by an amount corresponding to the width of the slide glasses 20a, 20b, 20c, and 20d, in order to position the injection module 10a2 above the surface of the slide glass 20d. Subsequently, a fifth spotting operation is performed in the same manner as in the fourth spotting operation. As a result, spot-forming liquid is jetted from the injection module 10a2 toward a spot region b5 of the slide glass 20d shown in Fig. 5, whereby the same detection spots as those formed in the spot region b1 are formed in the spot region b5.

After completion of the fifth spotting operation, the injection apparatus 10 is moved in the direction of arrow y2 shown in Fig. 4 by an amount corresponding to the length of the slide glasses 20a, 20b, 20c, and 20d, in order to position the injection modules 10a2 and 10a3 above the surfaces of the slide glasses 20a and 20d. Subsequently, a sixth spotting operation is performed in the same manner as in the fifth spotting operation. As a result, spot-forming liquid is jetted from the injection module 10a2 toward a spot region b6 of the slide glass 20a shown in Fig. 5, whereby the same detection spots as those formed in the spot region b1 are formed in the spot region b6. Similarly, spot-forming liquid is jetted from the injection module 10a3 toward a spot region c6 of the slide glass 20d shown in Fig. 5, whereby the same detection spots as those formed in the spot region c1 are formed in the spot region c6.

After completion of the sixth spotting operation, the injection apparatus 10 is moved in the direction of arrow y3 shown in Fig. 4 by an amount corresponding to the length of the slide glasses 20a, 20b, 20c, and 20d, in order to position the injection module 10a3 above the surface of the slide glass 20a. Subsequently, a seventh spotting operation is performed in the same manner as in the sixth spotting operation. As a result, spot-forming liquid is jetted from the injection module 10a3 toward a spot region c7 of the slide glass 20a shown in Fig. 5, whereby the same detection spots as those formed in the spot region c1 are formed in the spot region c7.

After completion of the seventh spotting operation, the injection apparatus 10 is moved in the direction of arrow x4 shown in Fig. 4 by an amount corresponding to the width of the slide glasses 20a, 20b, 20c, and 20d, in order to position the injection modules 10a3 and 10a4 above the surfaces of the slide glasses 20b and 20a. Subsequently, an eighth spotting operation is performed in the same manner as in the seventh spotting operation. As a result, spot-forming liquid is jetted from the injection module 10a4 toward a spot region d8 of the slide glass 20a shown in Fig. 5, whereby the same detection spots as those formed in the spot region d1 are formed in the spot region d8. Similarly, spot-forming liquid is jetted from the injection module 10a3 toward a spot region c8 of the slide glass 20b shown in Fig. 5, whereby the same detection spots as those formed in the spot region c1 are formed in the spot region c8.

After completion of the eighth spotting operation, the injection apparatus 10 is moved in the direction of arrow x1 shown in Fig. 4 by an amount corresponding to the width of the slide glasses 20a, 20b, 20c, and 20d, in order to position the injection module 10a4 above the surface of the slide glass 20b. Subsequently, a ninth spotting operation is performed in the same manner as in the eighth spotting operation. As a result, spot-forming liquid is jetted from the injection module 10a4 toward a spot region d9 of the slide glass 20b shown in Fig. 5, whereby the same detection spots as those formed in the spot region d1 are formed in the spot region d9.

The injection apparatus 10 completes a first injection cycle through performance of the above-described nine spotting operations. Subsequently, the injection units 10d are cleaned and then filled with corresponding spot-forming liquids to thereby prepare for a second injection cycle. After completion of the preparation, the injection apparatus 10 resumes the operation in order to perform spotting operations in the same sequence as in the first injection cycle for a group of spot regions adjacent to the above-described group of spot regions.

In the detection-spot forming method of the present embodiment, through repetition of the above-described injection cycle, a predetermined number of detection spots are formed on the surface of each of the slide glasses 20a, 20b, 20c, and 20d in order to simultaneously fabricate DNA chips or DNA microarrays equal in number to the slide glasses 20a, 20b, 20c, and 20d.

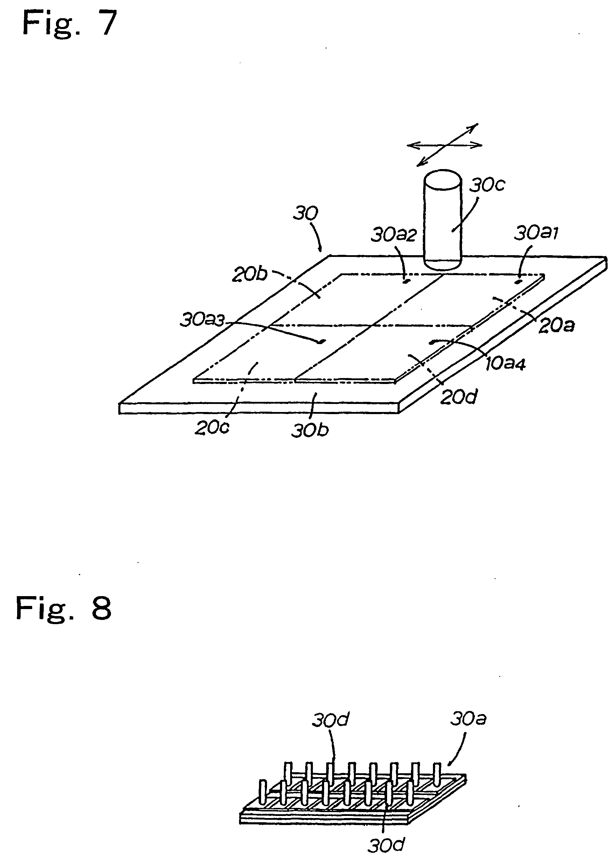

Fig. 7 shows a detection-spot forming method according to a second embodiment of the present invention; in particular, a positional relationship between an injection apparatus 30 used in the forming method and adapted to dispense a spot-forming liquid, and slide glasses 20 (indicated by two-dot chain lines and denoted by 20a to 20d), which are used as supports. The injection apparatus 30 is an experimental apparatus for experimentally carrying out the detection-spot forming method according to the present invention and includes four injection modules 30a (30a1 to 30a4). However, a practical apparatus may include several to several tens of injection modules 30a.

The four injection modules 30a of the injection apparatus 30 are disposed on a support table 30b. The injection apparatus 30 includes a drive unit 30c for intermittently moving the support table 30b within a horizontal plane along a front/back direction and a left/right direction (the directions of arrows shown in Fig. 7). Accordingly, all the injection modules 30a can be moved, together with the support table 30b, within a horizontal plane along the front/back and left/right directions.

Meanwhile, the number of slide glasses 20 on which detection spots are to be formed is set to four in order to match the number of the injection modules 30a. That is, four slide glasses 20a, 20b, 20c, and 20d are disposed below the injection apparatus 30 such that the slide glasses 20a, 20b, 20c, and 20d face the respective injection modules 30a with a predetermined vertical gap formed therebetween.

Notably, in the following description in relation to the injection modules 30a (30a1 to 30a4), the injection modules are denoted by 30a1 to 30a4 when they must be distinguished from each other, and the injection modules are denoted collectively by 30a when they need not be distinguished from each other. A similar rule is applied to the slide glasses 20 (20a, 20b, 20c, and 20d).

As shown in Fig. 8, each injection module 30a of the injection apparatus 30 is provided with 16 injection units 30d arranged in an 8 x 2 array. Each injection unit 30d has the same configuration as the injection unit 10d shown in Fig. 3 and holds a spot-forming liquid containing DNA fragments and the same components as described above.

Detection spots are formed on the surfaces of the slide glasses 20a, 20b, 20c, and 20d in the following manner by use of the injection apparatus 30. The drive unit 30c is operated to intermittently move the support table 30b in a horizontal plane along the front/back direction and/or the left/right direction in such a manner that the injection modules 30a1 to 30a4 disposed on the support table 30b are caused to successively face predetermined regions of the surfaces of the slide glasses 20a, 20b, 20c, and 20d, which are disposed below the injection apparatus 30; and all the injection units 30d of the respective injection modules 30a1 to 30a4 are caused to simultaneously jet spot-forming liquids toward the predetermined regions of the surfaces of the slide glasses 20a, 20b, 20c, and 20d. Thus, detection spots which are equal in number to the injection units 30d are formed in the regions.

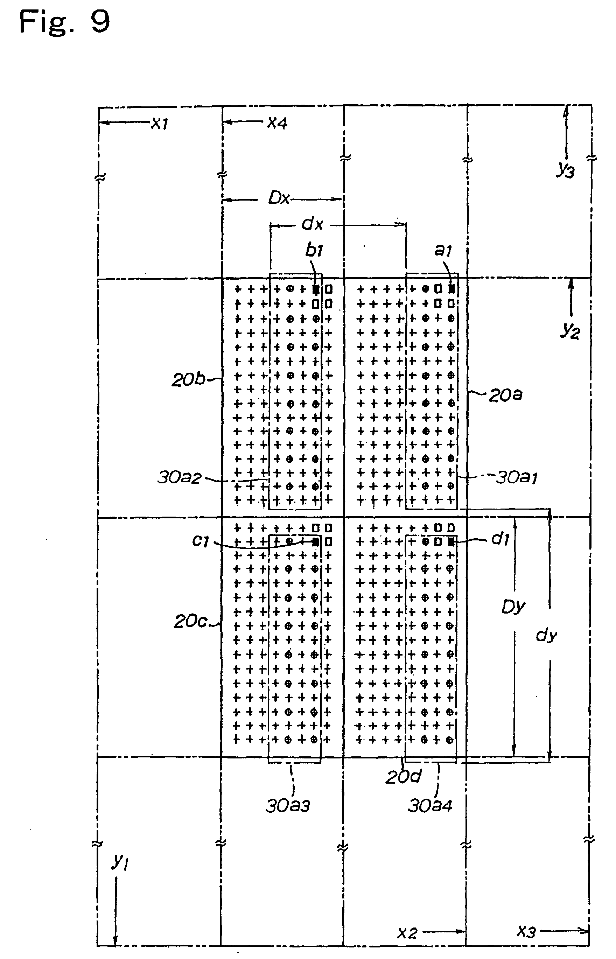

Fig. 9 shows the surfaces of the four slide glasses 20a, 20b, 20c, and 20d in the midst of an operation for forming detection spots, as well as the respective injection modules 30a1 to 30a4. In Fig. 9, a "+" mark indicates each of detection-spot forming positions on the slide glasses 20a, 20b, 20c, and 20d serving as supports; and a "o" mark indicates each of the discharge ports of the injection units 30d of the injection modules 30a1 to 30a4.

In Fig. 9, black-colored regions a1, b1, c1, and d1 represent respective regions in which single injection units 30d (located at the upper right corners of the injection modules in Fig. 9), among the 16 injection units 30d for each of the injection modules 30a1 to 30a4, form a detection spot simultaneously during a first spotting operation. In the spot forming method according to the present embodiment, all the injection units 30d of the respective injection modules 30a1 to 30a4 simultaneously jet spot-forming liquids toward detection-spot forming positions on the slide glasses 20a, 20b, 20c, and 20d, which positions correspond to the injection units 30d indicated by "o" marks, to thereby form detection spots. The detection spots thus formed all differ from one another in terms of components contained therein.

The positions of the injection units 30d of the injection modules 30a1 to 30a4, which face the surfaces of the slide glasses 20a, 20b, 20c, and 20d, are determined such that the distances between the corresponding injection units 30d of the injection modules 30a1 to 30a4 become an integral multiple of the intervals of the detection spots. Specifically, as shown in Fig. 9, the positional relationship among the injection modules 30a1 to 30a4 is set in such a manner that the distance dx between the injection modules 30a1 and 30a2 along the x1 direction is greater than the distance Dx between the slide glasses 20a and 20b along the x1 direction by an amount corresponding to the one interval of the detection spots; and that the distance dy between the injection modules 30a1 and 30a4 along the y1 direction is greater than the distance Dy between the slide glasses 20a and 20d along the y1 direction, by an amount corresponding to the one interval of the detection spots.

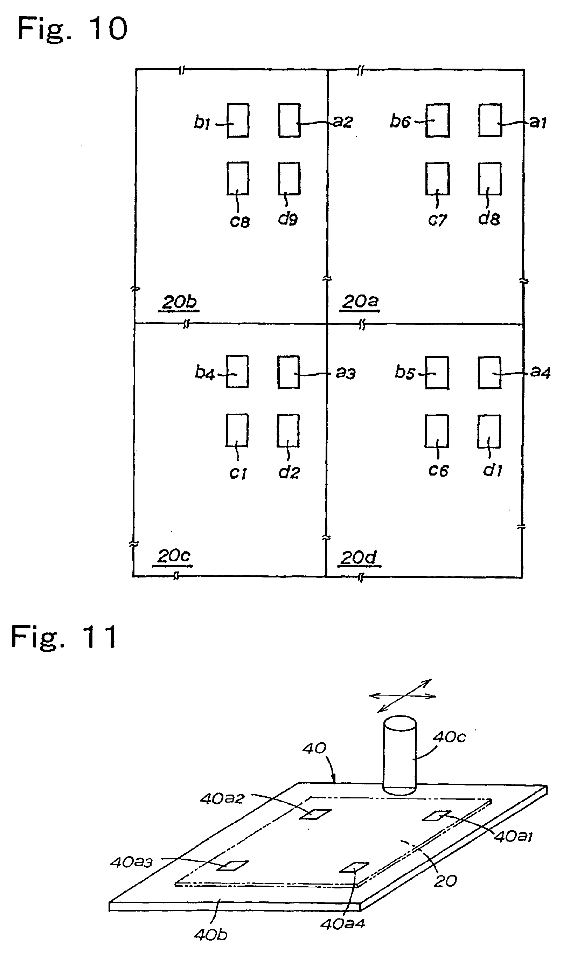

Fig. 10 shows portions of the surfaces of the slide glasses 20a, 20b, 20c, and 20d; in particular, regions in which the injection units 30d located at the upper right corners of the injection modules in Fig. 9, among the 16 injection units 30d of each of the injection modules 30a1 to 30a4, form a detection spot simultaneously during the first spotting operation.

After completion of the first spotting operation, the injection apparatus 30 is moved in the direction of arrow x1 shown in Fig. 9 by an amount corresponding to the width of the slide glasses 20a, 20b, 20c, and 20d, in order to position the injection modules 30a1 and 30a4 above the surfaces of the slide glasses 20b and 20c. Subsequently, a second spotting operation is performed in the same manner as in the first spotting operation. As a result, spot-forming liquid is jetted from the injection module 30a1 toward a spot region a2 of the slide glass 20b shown in Fig. 10, whereby the same detection spots as those formed in the spot region a1 are formed in the spot region a2. Similarly, spot-forming liquid is jetted from the injection module 30a4 toward a spot region d2 of the slide glass 20c shown in Fig. 10, whereby the same detection spots as those formed in the spot region d1 are formed in the spot region d2.

After completion of the second spotting operation, the injection apparatus 30 is moved in the direction of arrow y1 shown in Fig. 9 by an amount corresponding to the length of the slide glasses 20a, 20b, 20c, and 20d, in order to position the injection module 30a1 above the surface of the slide glass 20c. Subsequently, a third spotting operation is performed in the same manner as in the second spotting operation. As a result, spot-forming liquid is jetted from the injection module 30a1 toward a spot region a3 of the slide glass 20c shown in Fig. 10, whereby the same detection spots as those formed in the spot region a1 are formed in the spot region a3.

After completion of the third spotting operation, the injection apparatus 30 is moved in the direction of arrow x2 shown in Fig. 9 by an amount corresponding to the width of the slide glasses 20a, 20b, 20c, and 20d, in order to position the injection modules 30a2 and 30a1 above the surfaces of the slide glasses 20c and 20d. Subsequently, a fourth spotting operation is performed in the same manner as in the third spotting operation. As a result, spot-forming liquid is jetted from the injection module 30a2 toward a spot region b4 of the slide glass 20c shown in Fig. 10, whereby the same detection spots as those formed in the spot region b1 are formed in the spot region b4. Similarly, spot-forming liquid is jetted from the injection module 30a1 toward a spot region a4 of the slide glass 20d shown in Fig. 10, whereby the same detection spots as those formed in the spot region a1 are formed in the spot region a4.

After completion of the fourth spotting operation, the injection apparatus 30 is moved in the direction of arrow x3 shown in Fig. 9 by an amount corresponding to the width of the slide glasses 20a, 20b, 20c, and 20d, in order to position the injection module 30a2 above the surface of the slide glass 20d. Subsequently, a fifth spotting operation is performed in the same manner as in the fourth spotting operation. As a result, spot-forming liquid is jetted from the injection module 30a2 toward a spot region b5 of the slide glass 20d shown in Fig. 10, whereby the same detection spots as those formed in the spot region b1 are formed in the spot region b5.

After completion of the fifth spotting operation, the injection apparatus 30 is moved in the direction of arrow y2 shown in Fig. 9 by an amount corresponding to the length of the slide glasses 20a, 20b, 20c, and 20d, in order to position the injection modules 30a2 and 30a3 above the surfaces of the slide glasses 20a and 20d. Subsequently, a sixth spotting operation is performed in the same manner as in the fifth spotting operation. As a result, spot-forming liquid is jetted from the injection module 30a2 toward a spot region b6 of the slide glass 20a shown in Fig. 10, whereby the same detection spots as those formed in the spot region b1 are formed in the spot region b6. Similarly, spot-forming liquid is jetted from the injection module 30a3 toward a spot region c6 of the slide glass 20d shown in Fig. 10, whereby the same detection spots as those formed in the spot region c1 are formed in the spot region c6.

After completion of the sixth spotting operation, the injection apparatus 30 is moved in the direction of arrow y3 shown in Fig. 9 by an amount corresponding to the length of the slide glasses 20a, 20b, 20c, and 20d, in order to position the injection module 30a3 above the surface of the slide glass 20a. Subsequently, a seventh spotting operation is performed in the same manner as in the sixth spotting operation. As a result, spot-forming liquid is jetted from the injection module 30a3 toward a spot region c7 of the slide glass 20a shown in Fig. 10, whereby the same detection spots as those formed in the spot region c1 are formed in the spot region c7.

After completion of the seventh spotting operation, the injection apparatus 30 is moved in the direction of arrow x4 shown in Fig. 9 by an amount corresponding to the width of the slide glasses 20a, 20b, 20c, and 20d, in order to position the injection modules 30a3 and 30a4 above the surfaces of the slide glasses 20b and 20a. Subsequently, an eighth spotting operation is performed in the same manner as in the seventh spotting operation. As a result, spot-forming liquid is jetted from the injection module 30a4 toward a spot region d8 of the slide glass 20a shown in Fig. 10, whereby the same detection spots as those formed in the spot region d1 are formed in the spot region d8. Similarly, spot-forming liquid is jetted from the injection module 30a3 toward a spot region c8 of the slide glass 20b shown in Fig. 10, whereby the same detection spots as those formed in the spot region c1 are formed in the spot region c8.

After completion of the eighth spotting operation, the injection apparatus 30 is moved in the direction of arrow x1 shown in Fig. 9 by an amount corresponding to the width of the slide glasses 20a, 20b, 20c, and 20d, in order to position the injection module 30a4 above the surface of the slide glass 20b. Subsequently, a ninth spotting operation is performed in the same manner as in the eighth spotting operation. As a result, spot-forming liquid is jetted from the injection module 30a4 toward a spot region d9 of the slide glass 20b shown in Fig. 10, whereby the same detection spots as those formed in the spot region d1 are formed in the spot region d9.

The injection apparatus 30 completes a first injection cycle through performance of the above-described nine spotting operations. Subsequently, the injection units 30d are cleaned and then filled with corresponding spot-forming liquids to thereby prepare for a second injection cycle. After completion of the preparation, the injection apparatus 30 resumes the operation in order to perform spotting operations in the same sequence as in the first injection cycle for a group of spot regions adjacent to the above-described group of spot regions.

In the detection-spot forming method of the present embodiment, through repetition of the above-described injection cycle, a predetermined number of detection spots are formed on the surface of each of the slide glasses 20a, 20b, 20c, and 20d in order to simultaneously fabricate DNA chips or DNA microarrays equal in number to the slide glasses 20a, 20b, 20c, and 20d.

Fig. 11 shows a detection-spot forming method according to a third embodiment of the present invention; in particular, a positional relationship between an injection apparatus 40 used in the forming method and a slide glass 20 (indicated by a two-dot chain line), which is used as a support. The injection apparatus 40 is an experimental apparatus for experimentally carrying out the detection-spot forming method according to the present invention and includes four injection modules 40a (40a1 to 40a4). However, a practical apparatus may include several to several tens of injection modules 40a.

The four injection modules 40a of the injection apparatus 40 are disposed on a support table 40b. The injection apparatus 40 includes a drive unit 40c for intermittently moving the support table 40b within a horizontal plane along a front/back direction and a left/right direction (the directions of arrows shown in Fig. 11). Accordingly, all the injection modules 40a can be moved, together with the support table 40b, within a horizontal plane along the front/back and left/right directions.

Meanwhile, the slide glass 20 on which detection spots are to be formed is a single piece and has a size to face all the injection modules 40a of the injection apparatus 40. That is, the slide glass 20 is disposed below the injection apparatus 40 such that the slide glass 20 faces the injection modules 40a with a predetermined vertical gap formed therebetween. In the injection apparatus 40, each injection module 40a has a single injection unit 40d. Each injection unit 40d has the same configuration as the injection unit 10d shown in Fig. 3 and holds a spot-forming liquid containing DNA fragments and the same components as described above.

Notably, in the following description in relation to the injection modules 40a (40a1 to 40a4), the injection modules are denoted by 40a1 to 40a4 when they must be distinguished from each other, and the injection modules are denoted collectively by 40a when they need not be distinguished from each other.

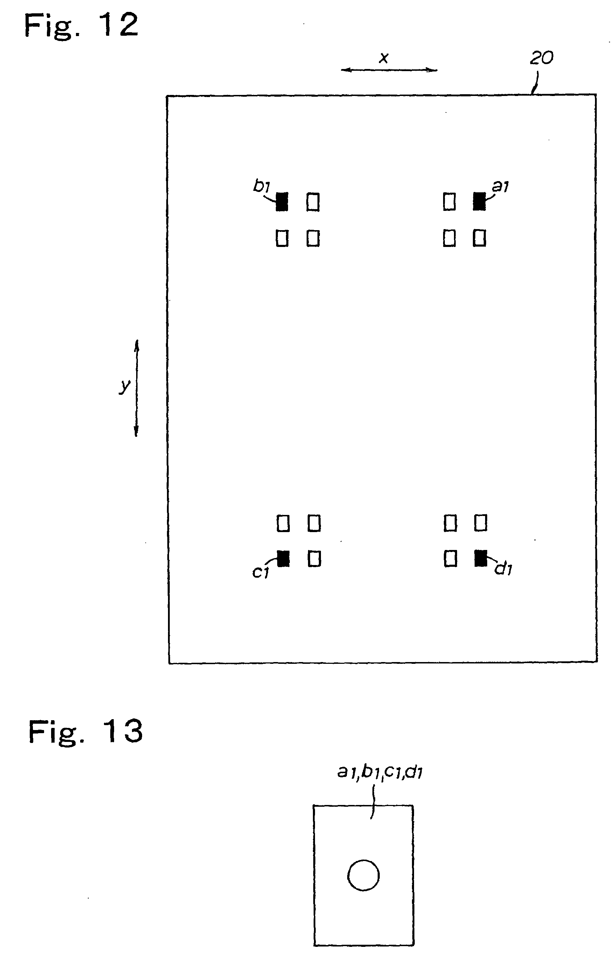

Detection spots are formed on the surface of the slide glass 20 in the following manner by use of the injection apparatus 40. The drive unit 40c is operated to intermittently move the support table 40b in a horizontal plane along the front/back direction and/or the left/right direction in such a manner that the injection modules 40a1 to 40a4 disposed on the support table 40b are caused to successively face predetermined regions of the surface of the slide glass 20, which is disposed below the injection apparatus 40; and all the injection units 40d of the respective injection modules 40a1 to 40a4 are caused to simultaneously jet spot-forming liquids toward the predetermined regions of the surface of the slide glass 20. Thus, detection spots which are equal in number to the injection units 40d are formed in the regions. Fig. 12 shows the surface of the slide glass 20 in the midst of an operation for forming detection spots.

In Fig. 12, black-colored regions a1, b1, c1, and d1 represent regions in which the injection modules 40a1 to 40a4 form detection spots simultaneously during a first spotting operation. In the black-colored regions a1, b1, c1, and d1 of the slide glass 20, all the injection units 40d of injection modules 40a1 to 40a4 simultaneously jet spot-forming liquids in order to form detection spots simultaneously. The number of simultaneously formed detection spots corresponds to the number of the injection units 40d of the injection modules 40a1 to 40a4. In the injection apparatus 40, as shown in Fig. 13, a single detection spot is formed in each of the black-colored regions a1, b1, c1, and d1. The detection spots thus formed simultaneously differ from one another in terms of components contained therein.

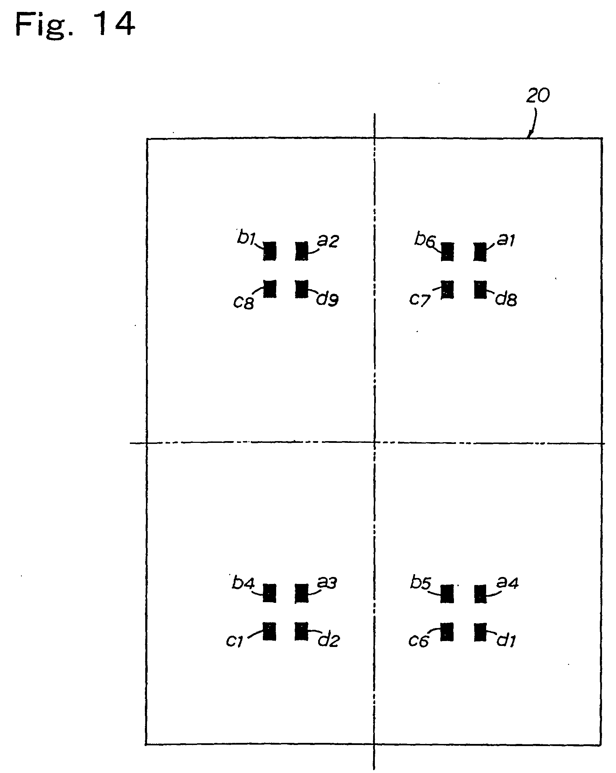

After completion of the first spotting operation, the injection modules 40a1 to 40a2 are moved above the surface of the slide glass 20 along directions of arrows x and y shown in Fig. 12 in the same sequence as in the above-described forming methods. Thus, detection spots are formed in regions (a2, a3, a4), regions (b4, b5, b6), regions (c6, c7, c8), and regions (d2, d8, and d9) shown in Fig. 14 in the sequence of the numerals attached to the respective reference letters.

When a larger number of types of detection spots must be formed by the detection-spot forming method according to the third embodiment, the injection units 40d are cleaned and then filled with corresponding spot-forming liquids to thereby prepare for a second injection cycle. Subsequently, in the same manner as in the first injection cycle, the injection units 40d are caused to jet spot-forming liquids toward detection-spot forming positions in a region adjacent to the group of detection spots which have been formed in the first injection cycle. In this manner, groups of detection spots are formed successively.

In the detection-spot forming method of the present embodiment, through repetition of the above-described injection cycle, a predetermined number of detection spots are formed on the surface of the slide glass 20. By virtue of the above-described operation, four DNA chips or DNA microarrays are simultaneously formed in, for example, four regions of the slide glass 20. Subsequently, the slide glass 20 is divided along two-dot chain lines shown in Fig. 14 before use.

In the above-described detection-spot forming methods according to the first and second embodiments of the present invention, the injection units 10d, 30d are used as means for spotting detection spots. Therefore, use of a plurality of injection modules 10a, 30a enables simultaneous jetting of spot-forming liquids from the injection units 10d, 30d of these injection modules 10a, 30a to the surfaces of slide glasses 20 which are equal in number to the injection modules 10a, 30a. Use of such a spotting means improves the efficiency of a process of fabricating DNA chips or DNA mircoarrays each having several thousands to several tens of thousands of detection spots.

In the above-described detection-spot forming method according to the third embodiment of the present invention, the injection units 40d are used as means for spotting detection spots. Therefore, use of a plurality of injection modules 40a enables simultaneous jetting of spot-forming liquids from the injection units 40d of these injection modules 40a to regions on the surface of a slide glass 20, which regions correspond to the respective injection units 40d. Use of such a spotting means improves the efficiency of a process of fabricating DNA chips or DNA mircoarrays each having several to several hundreds of detection spots.

That is, the detection-spot forming methods of the first through third embodiments can shorten the time required to form detection spots during the fabrication of a large number of DNA chips or DNA microarrays each having several thousands to several tens of thousands of detection spots, or DNA chips or DNA microarrays each having several to several hundreds of detection spots, as compared with a conventional detection-spot forming method employing a spotting scheme on the basis of contact with the surface of a support, such as a pin scheme, which can form detection spots on the surface of a single support only through a single spotting operation. Thus, the detection-spot forming methods of the first through third embodiments can provide DNA chips or DNA microarrays at reduced cost.

In these detection-spot forming methods, since the injection units 10d, 30d, 40d of the respective injection modules are maintained in a state of use during formation of detection spots, spot-forming liquid within the discharge openings of the injection units do not dry. Therefore, jetting of spot-forming liquid can be performed consistently, and thus, predetermined detection spots can be formed reliably.

Further, these detection-spot forming methods reduce the number of movements of the injection modules 10a, 30a, 40a, to thereby suppress drying of spot-forming liquid at the exit ends of the discharge ports of the injection units 10d, 30d, 40d which would otherwise occur due to air flow caused by movement of the injection apparatus 10, 30, 40, and suppress vibration of the discharge ports which occurs due to movement of the injection modules 10a, 30a, 40a. Therefore, during formation of detection spots, spot-forming liquid can be jetted from the injection units 10d, 30d, 40d of the respective injection modules more consistently, and thus, predetermined detection spots can be formed reliably. As a result, quality of DNA chips or DNA microarrays can be improved further.

In the detection-spot forming methods according to the first and second embodiments, when the injection modules 10a, 30a are successively moved to be located above the surfaces of slide glasses in order to jet spot-forming liquid, some of the injection modules 10a, 30a move to positions outside the surfaces of the slide glasses 20 (regions indicated by two-dot chain lines in Figs. 4 and 9). Even in such a case, the injection units 10d, 30d of the injection modules 10a, 30a located outside the surfaces of the slide glasses 20 are caused to jet spot-forming liquid in order to maintain all the injection units 10d, 30d in a state of use. The spot-forming liquid jetted from injection unit 10d, 30d of the injection modules located outside the surfaces of the slide glasses 20 can be used for judgment as to whether the state of jetting is proper. This advantageous effect can be attained by the detection-spot forming method according to the third embodiment as well. In this case, the spot-forming liquid jetted from the injection units 40d located outside the surface of the single slide glass 20 can be used for judgment as to whether the state of jetting is proper.

The regions in which the injection modules 10a, 30a located outside the surfaces of the slide glasses 20 jet spot-forming liquid are indicated by two-dot chain lines in Figs. 4 and 9. The jetting of spot-forming liquid from the injection modules 10a, 30a at positions outside the surfaces of the slide glasses 20 does not contribute to formation of detection spots on the surfaces of the slide glasses 20. Therefore, spotting regions outside the surfaces of the slide glasses 20 are desirably reduced to a possible extent. Such reduction can attained through an increase in the number of slide glasses 20 to be used. In this case, the ratio of spotting regions not contributing to formation of detection spots to the entire region can be reduced in proportion to the number of the slide glasses 20. This also holds true in the detection-spot forming method according to the third embodiment. In this case, useless consumption of spot-forming liquid can be reduced through an increase in the number of detection-spot forming regions on a single slide glass 20.

The detection-spot forming methods according to the first through third embodiments can be applied not only to fabrication of DNA chips or DNA microarrays, but also to fabrication of bio chips each having detection spots including antibodies as components, and protein chips each having detection spots including proteins as components. In particular, during fabrication of DNA chips or DNA microarrays, spot-forming liquids containing DNA fragments having limited useful lives are handled, and therefore, such detection spots must be formed as quickly as possible. Accordingly, the detection-spot forming methods according to the first through third embodiments are particularly effective for fabrication of DNA chips and DNA microarrays.

## Claims

1. A detection-spot forming method for analyte detection chips each including a support and a large number of detection spots arranged in a regular pattern on a surface of the support and containing different components, each detection chip detecting a specific component of an applied analyte through determination of the relation of specificity between the specific component of the applied analyte and a specific detection spot among the detection spots, the method comprising:
providing, as means for forming detection spots on the surface of a support, a plurality of injection modules each equipped with one or more injection units adapted to jet spot-forming liquid containing a component for formation of the detection spots; and
jetting the spot-forming liquid simultaneously from the injection units of the respective injection modules toward the surfaces of a plurality of supports corresponding to the injection modules in order to simultaneously form detection spots on the surfaces of the supports.

2. A detection-spot forming method according to claim 1, wherein the positions of the injection units of the injection modules, which face the surfaces of the respective supports, are determined such that the distances between the corresponding injection units of the injection modules become integral multiples of the intervals of the detection spots; and the injection modules successively form detection spots in different regions on the surfaces of the respective supports, while moving to locate above the surfaces of the supports successively.

3. A detection-spot forming method according to claim 2, wherein when the injection modules are moved to be located above the surfaces of the respective supports successively, spot-forming liquid jetted from injection units located outside the surfaces of the supports is used for judgment as to whether the injection units operate properly.

4. A detection-spot forming method according to claim 1, wherein
each injection module includes at least one injection unit comprising:
a charge port for charging a spot-forming liquid from the outside, a cavity into which the spot-forming liquid is introduced and charged, and a discharge port for discharging the spot-forming liquid; and
a piezoelectric/electrostrictive element attached to at least one side wall surrounding the cavity, wherein
the cavity is made of ceramics so as to be configured to allow the spot-forming liquid to flow within the cavity, and
upon drive of the piezoelectric/electrostrictive element, the volume of the cavity is changed in order to discharge the spot-forming liquid in a predetermined amount from the discharge port, to thereby form a detection spot on the surface of the support.

5. A detection-spot forming method according to claim 1, wherein each injection module includes a large number of injection units which hold different spot-forming liquids for forming different detection spots containing different components.

6. A detection-spot forming method according to claim 1, wherein the detection chip is a DNA chip or DNA microarray having detection spots containing DNA fragments, a bio chip having detection spots including antibodies, or a protein chip having detection spots including proteins.

7. A detection-spot forming method for analyte detection chips each including a support and a large number of detection spots arranged in a regular pattern on a surface of the support and containing different components, each detection chip detecting a specific component of an applied analyte through determination of the relation of specificity between the specific component of the applied analyte and a specific detection spot among the detection spots, the method comprising:
providing, as means for forming detection spots on the surface of a support, a plurality of injection modules each equipped with one or more injection units adapted to jet spot-forming liquid containing a component for formation of the detection spots;
jetting the spot-forming liquid simultaneously from the injection units of the respective injection modules toward the surface of a single support which faces the injection modules in order to simultaneously form detection spots on the surface of the support; and
dividing the support into a plurality of pieces.

8. A detection-spot forming method according to claim 7, wherein the positions of the injection units of the injection modules, which face the surface of the support, are determined such that the distances between the corresponding injection units of the injection modules become integral multiples of the intervals of the detection spots; and the injection modules successively form detection spots in different regions on the surface of the support, while moving to locate above the different regions of the support successively.

9. A detection-spot forming method according to claim 7, wherein when the injection modules are moved to be located above the regions on the surface of the support successively, spot-forming liquid jetted from injection units located outside the surface of the support is used for judgment as to whether the injection units operate properly.

10. A detection-spot forming method according to claim 7, wherein
each injection module includes at least one injection unit comprising:
a charge port for charging a spot-forming liquid from the outside, a cavity into which the spot-forming liquid is introduced and charged, and a discharge port for discharging the spot-forming liquid; and
a piezoelectric/electrostrictive element attached to at least one side wall surrounding the cavity, wherein
the cavity is made of ceramics so as to be configured to allow the spot-forming liquid to flow within the cavity, and
upon drive of the piezoelectric/electrostrictive element, the volume of the cavity is changed in order to discharge the spot-forming liquid in a predetermined amount from the discharge port, to thereby form a detection spot on the surface of the support.

11. A detection-spot forming method according to claim 7, wherein each injection module includes a large number of injection units which hold different spot-forming liquids for forming different detection spots containing different components.

12. A detection-spot forming method according to claim 7, wherein the detection chip is a DNA chip or DNA microarray having detection spots containing DNA fragments, a bio chip having detection spots including antibodies, or a protein chip having detection spots including proteins.
